# EUROPEAN PATENT APPLICATION

(11) **EP 4 810 191 A1**
(43) Date of publication of application: **23.09.2026**
(21) Application number: 25165370.5
(22) Date of filing: 21.03.2025
(51) Int. Cl.: B23K 35/30, C22C 38/00, C22C 38/02, C22C 38/42, C22C 38/48, C22C 38/50, C22C 38/54, C22C 38/58, B23K 35/02, B23K 101/14, C22C 38/44

(54) **IRON-BASED BRAZING FILLER COMPOSITION AND BRAZED PRODUCT**

(71) Applicant: Alfa Laval Corporate AB, 221 00 Lund (SE)
(72) Inventor: KNUTSSON, Axel, 221 00 LUND (SE); SJÖDIN, Per, 221 00 LUND (SE); POUS ROMERO, Hector, 221 00 LUND (SE)
(74) Representative: Alfa Laval Attorneys

(57) **Abstract**

The disclosure relates to an iron-based brazing filler composition for bonding stainless steels, particularly austenitic stainless steels, the filler composition comprising an alloy containing:
17.0-26.0 wt% chromium (Cr),
8.0-22.0 wt% nickel (Ni),
5.0-15.0 wt% silicon (Si),
0.1-1.0 wt% boron (B),
0-0.1 wt% molybdenum (Mo),
0-2.0 wt% manganese (Mn),
0-0.25 wt% carbon (C),
0-0.05 wt% phosphorus (P),
0-0.03 wt% sulfur (S),
0-0.2 wt% nitrogen (N),
0-1.0 wt% niobium (Nb),
0-0.7 wt% titanium (Ti),
0-0.1 wt% cerium (Ce),
the balance being iron (Fe), together with any unavoidable impurities. The disclosure further relates to a method for manufacturing a brazed product and to a brazed product manufactured by brazing objects with the iron-based brazing material.

## Description

### Technical Field

The present disclosure relates to an iron-based brazing filler composition for joining objects by brazing. The invention also comprises a brazed product manufactured by brazing stainless steel objects with the iron-based brazing filler composition.

### Background

Pressed plate heat exchangers are commonly constructed from austenitic stainless steel, with 316 stainless steel being a common choice. This preference arises from its advantageous wet corrosion resistance and superior forming properties compared to ferritic stainless steels. Austenitic stainless steels, such as 316, are particularly well-suited for applications where the material is exposed to corrosive environments and where formability is essential for manufacturing complex geometries, such as the intricate plates used in heat exchangers.

The stainless steel components are typically joined by brazing using a brazing filler composition. The brazing filler composition has a melting temperature lower than that of the components to be joined, allowing the joint to be formed without melting the components.

Current brazing filler compositions for bonding stainless steels typically utilize iron-based fillers that incorporate silicon (Si) and boron (B) as melting point depressants. These fillers are designed to bond effectively with materials containing 316 stainless steel. Their composition closely resembles that of the stainless steel itself, with increased concentrations of Si and B at the expense of iron (Fe) to achieve the desired brazing characteristics.

The 316 stainless steel materials are primarily used in applications where operating temperatures remain below 550 °C, as wet corrosion resistance is a critical property in such environments. One of the key elements influencing the wet corrosion resistance of 316 stainless steel is molybdenum (Mo). However, Mo, while beneficial in low-temperature corrosion resistance, can detract from the high-temperature oxidation resistance of the material. This is because Mo is prone to oxidation at elevated temperatures, typically above 600 °C.

For applications requiring high-temperature performance, stainless steel grades with low or no Mo content are often preferred. Such stainless steel grades, which exhibit excellent high-temperature oxidation resistance, include austenitic stainless steels like AISI 309, AISI 309S, AISI 310, AISI 310S, AISI 310H, AISI 321, AISI 347, AISI 347H, 153MA, and 253MA. These stainless steel grades are tailored for environments where high-temperature durability is a critical requirement, making them suitable candidates for applications beyond the capabilities of Mo-containing alloys like 316 stainless steel.

This invention addresses the need for brazing filler compositions that not only provide strong and reliable bonds but also align with the specific material and environmental requirements of stainless steels used in diverse applications, ranging from low-temperature wet corrosion resistance to high-temperature oxidation resistance.

### Summary

In view of the above, the present disclosure provides an improved or alternative technology having the features set out in the independent claims.

An object of the present disclosure is to provide an improved iron-based brazing filler composition for use with stainless steel grades with low or no Mo content.

A further object of the present disclosure is to provide an improved iron-based brazing filler composition for use with stainless steel grades with low or no Mo content, which provides good flow properties with low burn through on the base material under typical brazing conditions.

A further object of the present disclosure is to provide an improved method of brazing stainless steel grades with low or no Mo content, using an iron-based brazing filler composition.

According to a first aspect, there is provided an iron-based brazing filler composition for bonding stainless steels, particularly austenitic stainless steels, the filler composition comprising an alloy containing:
17.0-26.0 wt% chromium (Cr),
8.0-22.0 wt% nickel (Ni),
5.0-15.0 wt% silicon (Si),
0.1-1.0 wt% boron (B),
0-0.1 wt% molybdenum (Mo),
0-2.0 wt% manganese (Mn),
0-0.25 wt% carbon (C),
0-0.05 wt% phosphorus (P),
0-0.03 wt% sulfur (S),
0-0.2 wt% nitrogen (N),
0-1.0 wt% niobium (Nb),
0-0.7 wt% titanium (Ti),
0-0.1 wt% cerium (Ce),
the balance being iron (Fe), together with any unavoidable impurities.

The invention relates to an iron-based brazing filler composition designed for bonding stainless steels, particularly austenitic stainless steels. The composition offers a balance of properties that ensure strong, reliable bonds with enhanced corrosion resistance and high-temperature performance. The iron-based brazing filler composition of the present disclosure is particularly well suited for brazing austenitic stainless steel grades with low or no Mo content. Examples of such austenitic stainless steel grades include stainless steels selected from the group consisting of AISI 309, AISI 309S, AISI 310, AISI 310S, AISI 310H, AISI 321, AISI 347, AISI 347H, 153MA, and 253MA.

The iron-based brazing filler composition of the present disclosure comprises an alloy containing at least Fe, Cr, Ni, Si and B. In addition to these elements, the alloy may optionally further comprise smaller amounts of one or more of Mo, Mn, C, P, S, N, Nb, and Ti, as well as unavoidable impurities.

The term "iron-based" as used herein means that the brazing filler composition comprises iron (Fe) as its main constituent by weight. The term "the balance being Fe" means that the remaining content in the alloy consists of Fe.

The term "alloy" refers to a material composed of two or more elements, at least one of which is a metal, that are combined to achieve specific properties that may not be present in the individual elements. The elements in an alloy are typically mixed together in a molten state and then solidified, forming a uniform or heterogeneous mixture.

In some embodiments, the iron-based brazing filler composition of the present disclosure consists of the alloy. In some embodiments the iron-based brazing filler composition of the present disclosure consists of the alloy comprises the alloy and one or more additional components. Such additional components may for example include binders, carriers or flux ingredients. In brazing pastes, organic binders and carriers, for example polymers, water, or solvents, may be included to hold the filler in place during application. These materials typically burn off during the brazing process.

An iron-based brazing filler composition according to the present disclosure has been found to provide good flow properties and wetting of the surface of stainless steel grades with low or no Mo content under typical brazing conditions, such as a temperature of at least 1150°C in a nonoxidizing atmosphere, a reducing atmosphere, vacuum or a combination thereof.

An iron-based brazing filler composition according to the present disclosure has further been found to exhibit excellent brazing properties, such good wetting, flow and gap filling properties with low risk of burn through and low formation of chromium borides under typical brazing conditions at around 1200-1250 °C. Those properties are advantageous for making a leak tight product with desired mechanical and corrosive properties with low risk of burn through.

The iron-based brazing filler composition according to the present disclosure is particularly useful for the manufacture of plate heat exchangers from austenitic stainless steel grades with low or no Mo content for high-temperature oxidation resistance. Examples of such include austenitic stainless steel grades include, but are not limited to AISI 309, AISI 309S, AISI 310, AISI 310S, AISI 310H, AISI 321, AISI 347, AISI 347H, 153MA, and 253MA.

The Mo content of the iron-based brazing filler composition of the present disclosure is in the range of 0-0.1 wt%, i.e. the Mo content is zero or at least not higher than 0.1 wt%. In some embodiments, the composition is free or substantially free of Mo.

The iron-based brazing filler composition of the present disclosure comprises a combination of Si and B to provide good flow properties and wetting of the surface while maintaining low burn through on the base material under typical brazing conditions.

The iron-based brazing filler composition of the present disclosure has an Si content in the range of 5.0-15.0 wt% and a B content in the range of 0.1-1.0 wt%.

The iron-based brazing filler composition of the present disclosure is advantageously used for manufacturing a plate heat exchanger intended for at least two heat exchanging media, which comprises at least one plate package manufactured by brazing together a number of thin-walled heat exchanger plates formed from austenitic stainless steel grades with low or no Mo content using the iron-based brazing filler composition. The heat exchanger plates define between themselves plate interspaces intended for the heat exchanging media. The formed brazing joints have a metallurgical composition close to the composition of the stainless steel plate material. When the expression thin-walled is used in connection with plate heat exchangers it refers to plates with a thickness below 1 mm. Such thin plates are necessary in order to obtain an efficient heat transfer. For thin-walled products as heat exchanger plates it is particularly important to have the right amount of silicon and boron in the iron-based brazing filler composition.

In some embodiments, the Si content is in the range of 7.5-12.0 wt%, and preferably in the range of 10.0-12.0 wt%. Such Si content is particularly advantageous for brazing of thin-walled components such as heat exchanger plates.

In some embodiments, the B content is in the range of 0.3-1.0 wt%, and preferably in the range of 0.3-0.7 wt%. Such B content is particularly advantageous for brazing of thin-walled components such as heat exchanger plates.

It is preferred to keep the B content at 1.0 wt% or less, and more preferably at 0.7 wt% or less.

One reason for this is that the B in contrast to the Si diffuses very rapidly into and within the stainless steel material being brazed. This affects the performance of the brazed product.

Another reason for avoiding a high content of boron is that both the iron-based brazing filler composition and the stainless steel grades to be brazed contain chromium. The chromium content governs to a great extent the corrosion properties of the stainless steel. If there is chromium in the object to be brazed and boron in the brazing material there is a risk for formation of chromium borides. Each boron atom binds 3.8 chromium atoms if the formula for the boride is Cr23B6. Also the fact that the relationship in the molecule weight between Cr and B is 52.0 / 10.8 = 4.8 shows that even small percentages, e.g. 2-3 % B may decrease the chromium content to such an extent that it will have a negative impact on the corrosion resistance. The corrosion resistance of the steel will decrease with each boride that is formed. The chromium borides will be harder than the base material and have also a needle formed shape. Their shape may give rise to stress concentration and consequently crack formation.

According to the proposed invention silicon is the element used for decreasing the melting point and boron only to a smaller extent as a melting point decreasing element. The function of boron is mainly to increase the wettability of the brazing material.

In some embodiments, the Cr content is in the range of 21.5-26.0 wt%, preferably in the range of 22.0-26.0 wt%, and more preferably in the range of 24.0-26.0 wt%.

In some embodiments, the Ni content is in the range of 12.0-22.0 wt%, preferably in the range of 17.0-22.0 wt%, and more preferably in the range of 19.0-22.0 wt%.

Iron serves as the base element for the alloy, ensuring compatibility with stainless steel substrates. It provides the structural framework and supports the desired mechanical and thermal properties.

In some embodiments, the Fe content is in the range of 45.0-70.0 wt%, preferably in the range of 48.0-68.0 wt%, and more preferably in the range of 48.0-66.0 wt%.

In some embodiments, the iron-based brazing filler composition comprises an alloy containing:
24.0-26.0 wt% Cr,
19.0-22.0 wt% Ni,
5.0-15.0 wt% Si,
0.1-1.0 wt% B,
0-0.1 wt% Mo,
0-2.0 wt% Mn,
0-0.25 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
24.0-26.0 wt% Cr,
19.0-22.0 wt% Ni,
5.0-15.0 wt% Si,
0.1-1.0 wt% B,
0-0.1 wt% Mo,
0-2.0 wt% Mn,
0-0.080 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
24.0-26.0 wt% Cr,
19.0-22.0 wt% Ni,
5.0-15.0 wt% Si,
0.1-1.0 wt% B,
0-0.1 wt% Mo,
0-2.0 wt% Mn,
0.04-0.1 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
22.0-24.0 wt% Cr,
12.0-15.0 wt% Ni,
5.0-15.0 wt% Si,
0.1-1.0 wt% B,
0-0.1 wt% Mo,
0-2.0 wt% Mn,
0-0.20 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
22.0-24.0 wt% Cr,
12.0-15.0 wt% Ni,
5.0-15.0 wt% Si,
0.1-1.0 wt% B,
0-0.1 wt% Mo,
0-2.0 wt% Mn,
0-0.080 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
17.0-19.0 wt% Cr,
9.0-12.0 wt% Ni,
0-0.1 wt% N,
5.0-15.0 wt% Si,
0.1-1.0 wt% B,
0-0.1 wt% Mo,
0-2.0 wt% Mn,
0-0.080 wt% C,
0-0.045 wt% P,
0-0.030 wt% S,
0-0.70 wt% Ti,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
17.0-19.0 wt% Cr,
9.0-13.0 wt% Ni,
0-1.0 wt% Nb,
5.0-15.0 wt% Si,
0.1-1.0 wt% B,
0-0.1 wt% Mo,
0-2.0 wt% Mn,
0-0.080 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
17.0-19.0 wt% Cr,
9.0-13.0 wt% Ni,
0-1.0 wt% Nb,
5.0-15.0 wt% Si,
0.1-1.0 wt% B,
0-0.1 wt% Mo,
0-2.0 wt% Mn,
0.04-0.10 wt% C,
0-0.045 wt% P,
0-0.030 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
18.0-20.0 wt% Cr,
9.0-11.0 wt% Ni,
0.03-0.08 wt% Ce
5.0-15.0 wt% Si,
0.1-1.0 wt% B,
0-0.1 wt% Mo,
0-1.0 wt% Mn,
0.04-0.08 wt% C,
0.12-0.20 wt% N,
0-0.045 wt% P,
0-0.015 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition comprises an alloy containing:
20.0-22.0 wt% Cr,
10.0-12.0 wt% Ni,
0.03-0.08 wt% Ce
5.0-15.0 wt% Si,
0.1-1.0 wt% B,
0-0.1 wt% Mo,
0-1.0 wt% Mn,
0.05-0.12 wt% C,
0.12-0.20 wt% N,
0-0.045 wt% P,
0-0.015 wt% S,
the balance being Fe, together with any unavoidable impurities. In some embodiments, the Si content is in the range of 7.5-12.0 wt%, and preferably in the range of 10.0-12.0 wt%, and the B content is in the range of 0.3-1.0 wt%, and preferably in the range of 0.3-0.7 wt%.

In some embodiments, the iron-based brazing filler composition is produced by gas- or water atomising or melt-spinning.

According to a second aspect, there is provided a brazed product manufactured by brazing objects with an iron-based brazing material according to the first aspect, characterized in that the material in the objects to be brazed is austenitic stainless steel containing 0-0.1 wt% Mo.

In some embodiments, the material in the objects to be brazed is austenitic stainless steel which is free or substantially free of Mo.

In some embodiments, the material in the objects to be brazed is austenitic stainless steel selected from the group consisting of AISI 309, AISI 309S, AISI 310, AISI 310S, AISI 310H, AISI 321, AISI 347, AISI 347H, 153MA, and 253MA. In preferred embodiments, the material in the objects to be brazed is AISI 310S.

In some embodiments, AISI 310 contains:
24.0-26.0 wt% Cr,
19.0-22.0 wt% Ni,
0-1.5 wt% Si,
0-2.0 wt% Mn,
0-0.25 wt% C,
0-0.045 wt% P,
0-0.030 wt% S,
the balance being Fe, together with any unavoidable impurities.

In some embodiments, AISI 310S contains:
24.0-26.0 wt% Cr,
19.0-22.0 wt% Ni,
0-1.5 wt% Si,
0-2.0 wt% Mn,
0-0.080 wt% C,
0-0.045 wt% P,
0-0.030 wt% S,
the balance being Fe, together with any unavoidable impurities.

In some embodiments, AISI 310H contains:
24.0-26.0 wt% Cr,
19.0-22.0 wt% Ni,
0-0.75 wt% Si,
0-2.0 wt% Mn,
0.04-0.10 wt% C,
0-0.045 wt% P,
0-0.030 wt% S,
the balance being Fe, together with any unavoidable impurities.

In some embodiments, AISI 309 contains:
22.0-24.0 wt% Cr,
12.0-15.0 wt% Ni,
0-0.75 wt% Si,
0-2.0 wt% Mn,
0-0.20 wt% C,
0-0.045 wt% P,
0-0.030 wt% S,
the balance being Fe, together with any unavoidable impurities.

In some embodiments, AISI 309S contains:
22.0-24.0 wt% Cr,
12.0-15.0 wt% Ni,
0-1.0 wt% Si,
0-2.0 wt% Mn,
0-0.080 wt% C,
0-0.045 wt% P,
0-0.030 wt% S,
the balance being Fe, together with any unavoidable impurities.

In some embodiments, AISI 321 contains:
17.0-19.0 wt% Cr,
9.0-12.0 wt% Ni,
0-0.1 wt% N,
0-0.75 wt% Si,
0-2.0 wt% Mn,
0-0.080 wt% C,
0-0.045 wt% P,
0-0.030 wt% S,
0-0.70 wt% Ti,
the balance being Fe, together with any unavoidable impurities.

In some embodiments, AISI 347 contains:
17.0-19.0 wt% Cr,
9.0-13.0 wt% Ni,
0-1.0 wt% Nb,
0-0.75 wt% Si,
0-2.0 wt% Mn,
0-0.080 wt% C,
0-0.045 wt% P,
0-0.030 wt% S,
the balance being Fe, together with any unavoidable impurities.

In some embodiments, AISI 347H contains:
17.0-19.0 wt% Cr,
9.0-13.0 wt% Ni,
0-1.0 wt% Nb,
0-0.75 wt% Si,
0-2.0 wt% Mn,
0.04-0.10 wt% C,
0-0.045 wt% P,
0-0.030 wt% S,
the balance being Fe, together with any unavoidable impurities.

In some embodiments, 153MA contains:
18.0-20.0 wt% Cr,
9.0-11.0 wt% Ni,
0.03-0.08 wt% Ce
1.0-2.0 wt% Si,
0-1.0 wt% Mn,
0.04-0.08 wt% C,
0.12-0.20 wt% N,
0-0.045 wt% **P,**
0-0.015 wt% S.
the balance being Fe, together with any unavoidable impurities.

In some embodiments, 253MA contains:
20.0-22.0 wt% Cr,
10.0-12.0 wt% Ni,
0.03-0.08 wt% Ce
1.40-2.50 wt% Si,
0-1.0 wt% Mn,
0.05-0.12 wt% C,
0.12-0.20 wt% N,
0-0.045 wt% P,
0-0.015 wt% S,
the balance being Fe, together with any unavoidable impurities.

According to the invention, the iron based brazing filler composition preferably has substantially the same composition as the material in the objects to be brazed but with an additional content of Si and B replacing the same content of Fe by weight. After the brazing process the brazed product will have a similar composition in the brazed objects as in the brazing joints.

In some embodiments, the brazed objects are heat exchanger plates.

According to a third aspect, there is provided a method for manufacturing a brazed product, comprising:
a) applying an iron-based brazing filler composition according to the first aspect to an object, characterized in that the material in the object to be brazed is austenitic stainless steel containing 0-0.1 wt% Mo; and
b) heating the object and the iron-based brazing filler composition to a temperature of at least 1150°C in a nonoxidizing atmosphere, a reducing atmosphere, vacuum or a combination thereof, and brazing the object at the temperature of at least 1150 °C for at least 15 minutes.

The iron-based brazing filler composition according to the invention may be applied on the places where one desires a brazing joint by means of different methods. A powder of the brazing filler composition manufactured by any of the described methods may be suspended in some binder in order to be applied in some suitable manner. In other words, the iron-based brazing filler composition may consist of the

Additionally, variations to the disclosed embodiments can be understood and effected by the skilled person in practising the claimed invention, from a study of the disclosure, and the appended claims. Moreover, in the disclosure, there have been disclosed preferred examples of the invention and, although specific terms are employed, they are used in a generic and descriptive sense only and not for the purpose of limitation. The scope of the invention is set forth in the following claims, in which the word 'comprising' does not exclude other elements or steps, and the indefinite article 'a' or 'an' does not exclude a plurality.

### Example

A number of test blends were prepared by adding various amounts of Si and B to a powder of AISI 310S stainless steel. The compositions of the prepared test blends are set out in Table 1. Pastes of the test blends were prepared by blending the 310S powder with different amounts of Si and B powders. After weighing and blending the powders 20 wt% of a binder (Nicrobraz S Binder (TM), Wall Colmonoy) was added and the mixture was blended into a paste.

**Table 1. Paste composition (wt%)**

| | Fe | C | Cr | Mn | Ni | Si | B |
|---|---|---|---|---|---|---|---|
| M1 | 49.27 | 0.02 | 21.94 | 0.02 | 17.80 | 10.95 | 0.00 |
| M2 | 48.62 | 0.02 | 21.65 | 0.02 | 17.57 | 11.10 | 1.02 |
| M4 | 49.18 | 0.02 | 21.90 | 0.02 | 17.77 | 10.99 | 0.11 |
| M5 | 48.96 | 0.02 | 21.80 | 0.02 | 17.69 | 11.00 | 0.51 |
| M6 | 50.84 | 0.03 | 22.63 | 0.02 | 18.37 | 8.01 | 0.10 |
| M7 | 50.61 | 0.03 | 22.53 | 0.02 | 18.29 | 8.02 | 0.50 |
| M8 | 50.56 | 0.03 | 22.51 | 0.02 | 18.27 | 8.62 | 0.00 |

A flow/wetting test was performed on the test blends according to the following test procedure:
For the test, plates of Stainless-Steel type 310S with a thickness of 1.6 mm were used as test pieces. The test pieces were cleaned with detergent and rinsed with de-ionised water and acetone. The test pieces were marked accordingly with stop-off pen. Two test pieces per blend were tested. About 2 g of paste were placed at the centre of each test piece. The test pieces were placed in a vacuum furnace and heated to a temperature of 1215 °C or 1227 °C for 1 h, as set out in Table 2. The heat treatment (brazing) was conducted under vacuum. After 1 h at the elevated temperature the parts were cooled to room temperature and evaluated. Evaluation was performed by measuring the surface area of the test pieces wetted by the filler, by studying the characteristics of the flow and shape ocularly, and by studying the effect on the back side of the plate, indicating how much the filler had interacted with the base material.

The results of the flow/wetting test are presented in Table 2.

**Table 2. Flow/wetting test results**

| Paste | Sample | Amount (g) | Temp (°C) | Time (h) | Area (mm²) |
|---|---|---|---|---|---|
| M1 | 1 | 2.00 | 1215 | 1 | 153.71 |
| M1 | 2 | 1.99 | 1227 | 1 | 226.46 |
| M2 | 1 | 2.04 | 1227 | 1 | 617.62 |
| M2 | 2 | 2.06 | 1227 | 1 | 573.47 |
| M3 | 1 | 2.00 | 1227 | 1 | 410.71 |
| M3 | 2 | 2.00 | 1227 | 1 | 573.38 |
| M4 | 1 | 1.95 | 1227 | 1 | 178.89 |
| M5 | 1 | 1.98 | 1227 | 1 | 322.44 |
| M6 | 1 | 1.97 | 1227 | 1 | 110.29 |
| M7 | 2 | 1.99 | 1227 | 1 | 351.04 |
| M8 | 1 | 2.01 | 1227 | 1 | 111.83 |

Sample M1 showed low flow, probably due to the absence of B, since boron induces wetting of the surface. Sample M2 exhibited good flow but also a very high effect, e.g. burn through, on the base material, likely due to the high B content, then also decreasing the corrosion properties by the formation of chromium borides. This is not favourable for the intended use in thin plate heat exchangers but might work in other applications or when low amounts of brazing filler composition is used. M4-M7 were therefore selected for further investigation. M5 and M7 gave the best results in terms of largest surface wetting. There were some filler residuals left in the centre of the joint for M7, whereas the filler in M5 appeared to have been fully melted. M5 and M7 were also tested for tightening capability in plate heat exchangers and both were found to work satisfactorily. According to visual examination of the plate heat exchanger joints, less residuals were found after brazing for the M5 blend, why the M5 composition was found to be the most favourable.

## Claims

1. An iron-based brazing filler composition for bonding stainless steels, particularly austenitic stainless steels, the filler composition comprising an alloy containing:
17.0-26.0 wt% chromium (Cr),
8.0-22.0 wt% nickel (Ni),
5.0-15.0 wt% silicon (Si),
0.1-1.0 wt% boron (B),
0-0.1 wt% molybdenum (Mo),
0-2.0 wt% manganese (Mn),
0-0.25 wt% carbon (C),
0-0.05 wt% phosphorus (P),
0-0.03 wt% sulfur (S),
0-0.2 wt% nitrogen (N),
0-1.0 wt% niobium (Nb),
0-0.7 wt% titanium (Ti),
0-0.1 wt% cerium (Ce),
the balance being iron (Fe), together with any unavoidable impurities.

2. The iron-based brazing filler composition of claim 1, wherein the composition is free or substantially free of Mo.

3. The iron-based brazing filler composition of any preceding claim, wherein the Si content is in the range of 7.5-12.0 wt%, and preferably in the range of 10.0-12.0 wt%.

4. The iron-based brazing filler composition of any preceding claim, wherein the B content is in the range of 0.3-1.0 wt%, and preferably in the range of 0.3-0.7 wt%.

5. The iron-based brazing filler composition of any preceding claim, wherein the Cr content is in the range of 21.5-26.0 wt%, preferably in the range of 22.0-26.0 wt%, and more preferably in the range of 24.0-26.0 wt%.

6. The iron-based brazing filler composition of any preceding claim, wherein the Ni content is in the range of 12.0-22.0 wt%, preferably in the range of 17.0-22.0 wt%, and more preferably in the range of 19.0-22.0 wt%.

7. The iron-based brazing filler composition of any preceding claim, wherein the Fe content is in the range of 45.0-70.0 wt%, preferably in the range of 48.0-68.0 wt%, and more preferably in the range of 48.0-66.0 wt%.

8. The iron-based brazing filler composition according to any of the preceding claims, **characterized in that** the iron-based brazing filler composition is produced by gas- or water atomising or melt-spinning.

9. A brazed product manufactured by brazing objects with an iron-based brazing material according to any of the preceding claims, **characterized in that** the material in the objects to be brazed is austenitic stainless steel containing 0-0.1 wt% Mo.

10. The brazed product according to claim 9, wherein the material in the objects to be brazed is austenitic stainless steel which is free or substantially free of Mo.

11. The brazed product according to claim 9, wherein the material in the objects to be brazed is austenitic stainless steel selected from the group consisting of AISI 309, AISI 309S, AISI 310, AISI 310S, AISI 310H, AISI 321, AISI 347, AISI 347H, 153MA, and 253MA.

12. The brazed product according to claim 9, wherein the brazed objects are heat exchanger plates.

13. Method for manufacturing a brazed product, comprising:
a) applying an iron-based brazing filler composition according to any one of claims 1-8 to an object, **characterized in that** the material in the object to be brazed is austenitic stainless steel containing 0-0.1 wt% Mo; and
b) heating the object and the iron-based brazing filler composition to a temperature of at least 1150°C in a nonoxidizing atmosphere, a reducing atmosphere, vacuum or a combination thereof, and brazing the object at the temperature of at least 1150 °C for at least 15 minutes.
